# EUROPEAN PATENT APPLICATION

(11) **EP 1 594 132 A2**
(43) Date of publication of application: **09.11.2005**
(21) Application number: 05252759.5
(22) Date of filing: 04.05.2005
(51) Int. Cl.: G11B 20/10, G11B 20/12, G11B 20/18, G06F 3/06

(54) **Information recording medium, recording/reproducing method and apparatus and host apparatus**

(30) Priority: 06.05.2004 KR 2004031771
(71) Applicant: SAMSUNG ELECTRONICS CO., LTD., Suwon-si, Gyeonggi-do (KR)
(72) Inventor: Hwang, Sung-hee, Gangnam-gu, Seoul (KR); Ko, jung-wan, Yeongtong-gu, Suwon-si, Gyeonggi-do (KR); Lee, Kyung-Geun, Bundang-gu, Seongnam-si, Gyeonggi-do (KR)
(74) Representative: Davies, Robert Ean

(57) **Abstract**

An information recording medium (100), a recording/reproducing method and apparatus, and a host apparatus are provided to ensure compatibility between information recording media having functions of a new standard and existing standard drive systems. The information recording medium includes a data area (120), a defect management area (115) for managing a defect occurring in the data area, and an access control area (113) in which access control data regarding a recognizable function by a recording/reproducing apparatus into which the medium is loaded and access control data regarding an unrecognizable function by the recording/reproducing apparatus are recorded, wherein a write protection flag (32) recorded in the defect management area and the access control data recorded in the access control area provide reinitialize verification information for verifying whether the medium is reinitializable.

## Description

The present invention relates to an information recording medium, and more particularly, but not exclusively, to an information recording medium, a recording/reproducing method and apparatus, and a host apparatus, in which it is determined whether a rewritable medium can be reinitialized when the medium is loaded into a drive system.

The standards for optical systems including optical disc drive systems and optical discs have to be frequently updated in light of the developments of optical disc technology and semiconductor technology.

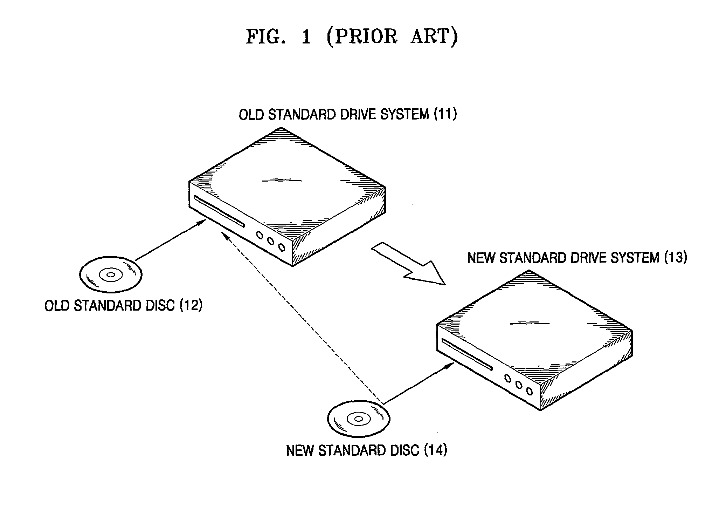

FIG. 1 is a diagram for illustrating problems related to updating standards for optical systems. Generally a new standard is obtained by adding new functions to an old standard, and an old standard disc 12 is designed to operate in an old standard drive system 11 and a new standard disc 14 is designed to operate in a new standard drive system 13.

The old standard and the new standard may or may not provide recording/reproducing compatibility. If the recording/reproducing compatibility is assured, the old standard disc 12 and the new standard disc 14 can be recorded/reproduced in both of the old and new standard drive systems 11 and 13. For example, when the new standard disc 14 is loaded into the old standard drive system 11, the old standard drive system 11 should properly operate in response to newly added functions in the new standard. Therefore, standards should be designed to accommodate the necessity of updating continuously.

Accordingly, it is desirable to define rules that allow a drive system to perform functions recognized by an existing standard and rules that allow the same drive system to perform new functions not recognized by the existing standard. In a case where a future standard is made by adding a new function to an existing standard, if a future standard drive system stores in a disc information regarding operations that an existing standard drive system needs to perform for the new function, the existing standard drive system can read the information from the disc adapted to the new function and perform the operations for the new function.

In this respect, a new technique of enabling an existing standard drive system to reinitialize a new standard disc loaded into the existing standard drive system is desired so as to accommodate newly added functions provided by a new standard.

Embodiments of the present invention provide an information recording medium, a recording/reproducing method and apparatus, in which a new standard disc can be advantageously reinitialized by an existing standard drive system, so as to provide compatibility between the new standard disc and the existing standard drive system.

According to an aspect of the present invention, an information recording medium is provided with a data area, a defect management area for managing a defect occurring in the data area, and an access control area in which access control data regarding a recognizable function by a recording/reproducing apparatus into which the medium is loaded and access control data regarding an unrecognizable function by the recording/reproducing apparatus are recorded, wherein a write protection flag recorded in the defect management area and the access control data recorded in the access control area provide reinitialize verification information for verifying whether the medium is reinitializable.

The access control data regarding the recognizable function and the access control data regarding the unrecognizable function may include common information to the recognizable function and the unrecognizable function. The common information may include an access control data ID for identifying a function, formatability information for indicating whether the medium is formatable, recordability/reproducibility information for indicating whether the defect management area is recordable/reproducible, and recordability/reproducibility information for indicating whether the data area is recordable/reproducible.

The information indicating whether a write inhibit hole formed in a cartridge containing the medium is open or closed may provide further reinitialize verification information.

The reinitialize verification information may be provided in a priority order of: the information indicating whether the write inhibit hole is open or closed; the write protection flag; formatability information included in the access control data regarding the unrecognizable function; recordability/reproducibility information included in the access control data regarding the unrecognizable function to indicate whether either of the defect management area and the data area is recordable/reproducible; formatability information included in the access control data regarding the recognizable function; and recordability/reproducibility information included in the access control data regarding the recognizable function to indicate whether either of the defect management area and the data area is recordable/reproducible.

The access control data regarding the recognizable function may further include information regarding reinitialization of the medium, and the information regarding reinitialization may provide further reinitialize verification information.

The reinitialize verification information may also be provided in a priority order of: the information indicating whether the write inhibit hole is open or closed; the write protection flag; formatability information included in the access control data regarding the unrecognizable function; recordability/reproducibility information included in the access control data regarding the unrecognizable function to indicate whether either of the defect management area and the data area is recordable/reproducible; formatability information included in the access control data regarding the recognizable function; recordability/reproducibility information included in the access control data regarding the recognizable function to indicate whether either of the defect management area and the data area is recordable/reproducible; and the information regarding reinitialization included in the access control data regarding the recognizable function.

According to another aspect of the present invention, an information recording medium is provided with a data area, a defect management area for managing a defect occurring in the data area, and an access control area in which access control data regarding a recognizable function by a recording/reproducing apparatus into which the medium is loaded and access control data regarding an unrecognizable function by the recording/reproducing apparatus are recorded, wherein information verifying whether the medium is reinitializable is provided by at least one among: information indicating whether a write inhibit hole formed in a cartridge containing the medium is open or closed; a write protection flag recorded in the defect management area; formatability information included in the access control data regarding the unrecognizable function to indicate whether the medium is formatable; recordability/reproducibility information included in the access control data regarding the unrecognizable function to indicate whether either of the defect management area and the data area is recordable/reproducible; formatability information included in the access control data regarding the recognizable function to indicate whether the medium is formatable; and recordability/reproducibility information included in the access control data regarding the recognizable function to indicate whether either of the defect management area and the data area is recordable/reproducible.

According to still another aspect of the present invention, a recording/reproducing method is provided for recording data onto or reproducing data from an information recording medium. Such a recording/reproducing method comprises reading a write protection flag from a defect management area provided for managing a defect occurring in a data area on the medium and reading access control data from an access control area in which access control data regarding a recognizable function by a recording/reproducing apparatus into which the medium is loaded and access control data regarding an unrecognizable function by the recording/reproducing apparatus are recorded; and determining whether to reinitialize the medium based on the write protection flag and the access control data.

The determining whether to reinitialize the medium may further depend on information indicating whether a write inhibit hole formed in a cartridge containing the medium is open or closed.

The determining whether to reinitialize the medium may also depend on information provided in a priority order of the information indicating whether the write inhibit hole is open or closed, the write protection flag; formatability information included in the access control data regarding the unrecognizable function, recordability/reproducibility information included in the access control data regarding the unrecognizable function to indicate whether either of the defect management area and the data area is recordable/reproducible, formatability information included in the access control data regarding the recognizable function, and recordability/reproducibility information included in the access control data regarding the recognizable function to indicate whether either of the defect management area and the data area is recordable/reproducible.

The access control data regarding the recognizable function may further include information regarding reinitialization of the medium, and the determining whether to reinitialize the medium may further depend on the information regarding reinitialization.

The determining whether to reinitialize the medium may also depend on information provided in a priority order of the information indicating whether the write inhibit hole is open or closed, the write protection flag, formatability information included in the access control data regarding the unrecognizable function, recordability/reproducibility information included in the access control data regarding the unrecognizable function to indicate whether either of the defect management area and the data area is recordable/reproducible, formatability information included in the access control data regarding the recognizable function, recordability/reproducibility information included in the access control data regarding the recognizable function to indicate whether either of the defect management area and the data area is recordable/reproducible, and the information regarding reinitialization included in the access control data regarding the recognizable function.

The recording/reproducing method may further include reinitializing the medium by removing data recorded in the defect management area and file system data recorded in the data area, if there is determined to reinitialize the medium.

According to yet another aspect of the present invention, a recording/reproducing method is provided for recording data onto or reproducing data from an information recording medium. Such a recording/reproducing method comprises reading a write protection flag from a defect management area provided for managing a defect occurring in a data area on the medium and reading access control data from an access control area in which access control data regarding a recognizable function by a recording/reproducing apparatus into which the medium is loaded and access control data regarding an unrecognizable function by the recording/reproducing apparatus are recorded; and determining whether to reinitialize the medium based information indicating whether a write inhibit hole formed in a cartridge containing the medium is open or closed, the write protection flag, formatability information included in the access control data regarding the unrecognizable function, recordability/reproducibility information included in the access control data regarding the unrecognizable function to indicate whether either of the defect management area and the data area is recordable/reproducible, formatability information included in the access control data regarding the recognizable function, and recordability/reproducibility information included in the access control data regarding the recognizable function to indicate whether either of the defect management area and the data area is recordable/reproducible.

According to a further aspect of the present invention, a recording/reproducing apparatus is provided for recording data onto and/or reproducing data from an information recording medium. Such a recording/reproducing apparatus comprises a writing/reading unit arranged to read a write protection flag from a defect management area provided for managing a defect occurring in a data area on the medium and reading access control data from an access control area in which access control data regarding a recognizable function by the recording/reproducing apparatus loaded with the medium and access control data regarding an unrecognizable function by the recording/reproducing apparatus are recorded; and a control unit arranged to determine whether to reinitialize the medium based on the write protection flag and the access control data.

The control unit may also determine whether to reinitialize the medium based on further information indicating whether a write inhibit hole formed in a cartridge containing the medium is open or closed.

The control unit may also determine whether to reinitialize the medium based on information provided in a priority order of the information indicating whether the write inhibit hole is open or closed, the write protection flag, formatability information included in the access control data regarding the unrecognizable function, recordability/reproducibility information included in the access control data regarding the unrecognizable function to indicate whether either of the defect management area and the data area is recordable/reproducible, formatability information included in the access control data regarding the recognizable function, and recordability/reproducibility information included in the access control data regarding the recognizable function to indicate whether either of the defect management area and the data area is recordable/reproducible.

The access control data regarding the recognizable function may further include information regarding reinitialization of the medium, and the control unit may determine whether to reinitialize the medium further based on the information regarding reinitialization.

The control unit may determine whether to reinitialize the medium based on information provided in a priority order of the information indicating whether the write inhibit hole is open or closed, the write protection flag, formatability information included in the access control data regarding the unrecognizable function, recordability/reproducibility information included in the access control data regarding the unrecognizable function to indicate whether either of the defect management area and the data area is recordable/reproducible, formatability information included in the access control data regarding the recognizable function, recordability/reproducibility information included in the access control data regarding the recognizable function to indicate whether either of the defect management area and the data area is recordable/reproducible, and the information regarding reinitialization included in the access control data regarding the recognizable function.

If the control unit determines to reinitialize the medium, the control unit may control the writing/reading unit to remove data recorded in the defect management area and file system data recorded in the data area.

According to another aspect of the present invention, a recording/reproducing apparatus is provided for recording data onto and/or reproducing data from an information recording medium. Such a recording/reproducing apparatus comprises a writing/reading unit arranged to read a write protection flag from a defect management area provided for managing a defect occurring in a data area on the medium and reading access control data from an access control area in which access control data regarding a recognizable function by the recording/reproducing apparatus loaded with the medium and access control data regarding an unrecognizable function by the recording/reproducing apparatus are recorded; and a control unit arranged to determine whether to reinitialize the medium based on information indicating whether a write inhibit hole formed in a cartridge containing the medium is open or closed, the write protection flag, formatability information included in the access control data regarding the unrecognizable function, recordability/reproducibility information included in the access control data regarding the unrecognizable function to indicate whether either of the defect management area and the data area is recordable/reproducible, formatability information included in the access control data regarding the recognizable function, and recordability/reproducibility information included in the access control data regarding the recognizable function to indicate whether either of the defect management area and the data area is recordable/reproducible.

According to still another aspect of the present invention, a recording/reproducing apparatus is provided for recording data onto and/or reproducing data from an information recording medium. Such a recording/reproducing apparatus includes a writing/reading unit arranged to read a write protection flag from a defect management area provided for managing a defect occurring in a data area on the medium and reading access control data from an access control area in which access control data regarding a recognizable function by the recording/reproducing apparatus loaded with the medium and access control data regarding an unrecognizable function by the recording/reproducing apparatus are recorded; and a control unit arranged to transmit the write protection flag and the access control data to a host apparatus, and to reinitialize the medium according to a result of the host apparatus determining whether to reinitialize the medium based on the write protection flag and the access control data.

According to yet another aspect of the present invention, a host apparatus is provided for a recording/reproducing apparatus writing data onto and/or reading data from an information recording medium. Such a host apparatus includes a control unit coupled to receive, from the recording/reproducing apparatus, a write protection flag read from a defect management area provided for managing a defect occurring in a data area on the medium and access control data read from an access control area in which access control data regarding a recognizable function by the recording/reproducing apparatus loaded with the medium and access control data regarding an unrecognizable function by the recording/reproducing apparatus are recorded, and determine whether to reinitialize the medium based on the write protection flag and the access control data.

According to yet another aspect of the present invention, there is provided a method comprising: receiving an information storage medium loaded into a drive system, the information recording medium comprising a data area to record user data, a defect management area to record at least write protection flag information, and an access control area to record access control data regarding a recognizable or unrecognizable function by the drive system into which the medium is loaded; and obtaining, at the drive system, reinitialize verification information including the write protection flag information recorded in the defect management area and the access control data recorded in the access control area of the medium; and determining whether to reinitialize the medium based on the reinitialize verification information including the write protection flag information and the access control data.

According to yet another aspect of the present invention, there is provided a drive system comprising: a writing/reading unit arranged to receive and read an information storage medium comprising a data area to record user data, a defect management area to record at least write protection flag information, and an access control area to record access control data regarding a recognizable or unrecognizable function; and a control unit arranged to obtain reinitialize verification information including the write protection flag information recorded in the defect management area and the access control data recorded in the access control area of the medium, and to determine whether to reinitialize the medium based on the reinitialize verification information including the write protection flag information and the access control data.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a diagram for illustrating problems related to updating standards for optical systems;
FIG. 2 illustrates a structure of a disc according to an embodiment of the present invention;
FIG. 3 illustrates a detailed structure of a defect management area (DMA) #1 shown in FIG. 2;
FIG. 4 illustrates a detailed structure of an access control area shown in FIG. 2;
FIG. 5 is a schematic block diagram of a recording/reproducing apparatus according to an embodiment of the present invention;
FIG. 6 is a flowchart of a reinitializing method according to an embodiment of the present invention;
FIG. 7 illustrates reinitialize verification information according to an embodiment of the present invention;
FIG. 8 is a flowchart of a reinitializing method according to another embodiment of the present invention;
FIG. 9 is a flowchart of an operation of reinitializing a disc, shown in FIGS. 6 and 8;
FIG. 10 is a flowchart of a reinitializing method using reinitialize verification information according to an embodiment of the present invention; and
FIG. 11 is a flowchart of a reinitializing method using reinitialize verification information according to another embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

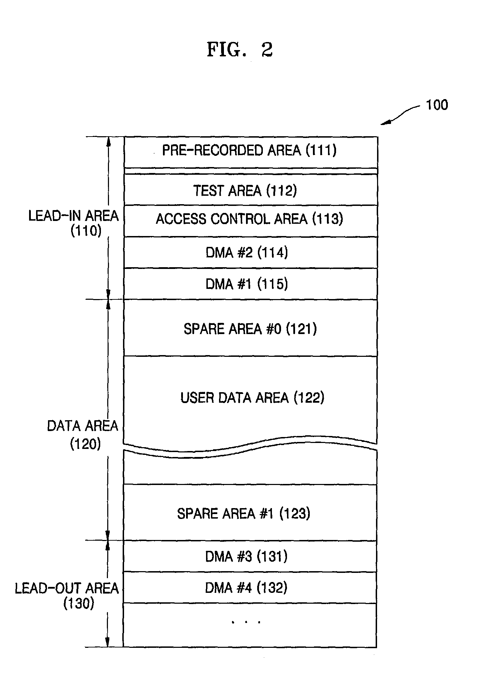

FIG. 2 illustrates a structure of an example disc 100 serving as an information recording medium according to an embodiment of the present invention. Referring to FIG. 2, the disc 100 includes a lead-in area 110, a data area 120, and a lead-out area 130.

The lead-in area 110 includes a pre-recorded area 111 in which predetermined data is recorded when the disc 100 is manufactured, a test area 112, an access control area 113, a defect management area (DMA) #2 114, and a DMA #1 115. The pre-recorded area 11 can be used only for reading. The test area 112, the access control area 113, the DMA #2 114, and the DMA #1 115 are areas to which data can be written and rewritten thereon.

The pre-recorded area 111 stores information regarding the disc 100 that is recorded, when the disc 100 is manufactured. For example, the pre-recorded area 111 stores a disc ID, such as a disc manufacturing number.

The test area 112 is provided to test a recording power or the like for optimal recording on the disc 100.

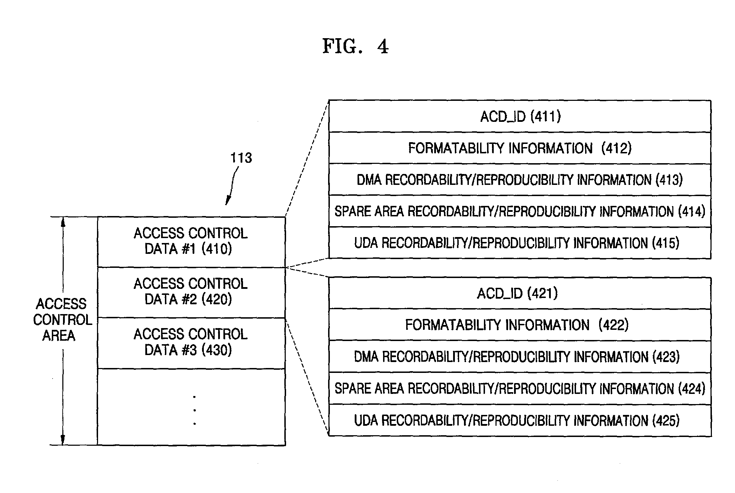

The access control area 113 is provided to record information prescribing operations of a drive system operating according to a new standard. The access control area 113 will be described in detail with reference to FIG. 4.

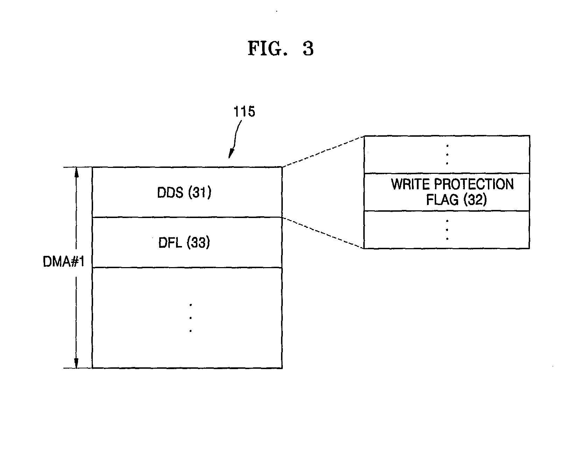

The DMA #1 115 and the DMA #2 114 are provided to record information regarding a defect occurring in a user data area 122. The DMA #1 115 and the DMA #2 114 will be described in detail with reference to FIG. 3.

The data area 120 includes a spare area #0 121, the user data area 122, and a spare area #1 123. The user data area 122 is provided to record user data. The spare area #0 121 and the spare area #1 123 provide replacement blocks replacing defective blocks occurring in the user data area 122.

The lead-out area 130 includes a DMA #3 131 and a DMA #4 132.

FIG. 3 illustrates a detailed structure of the DMA #1 115 shown in FIG. 2. Referring to FIG. 3, the DMA #1 115 includes a disc definition structure (DDS) 31 and a defect list (DFL) 33.

The DDS 31 includes defect management information and disc management information. The DDS 31 includes a write protection flag 32 as the disc management information. The write protection flag 32 provides information that permits or prohibits writing to a recordable area in the disc 100. For example, when the write protection flag 32 is set to "1", writing is prohibited with respect to all of the recordable area in the disc 100, except for the DMA. Here, the DMA may be excluded because information recorded in the DMA including the write protection flag 32 needs to be changed. When the write protection flag 32 is set to "0", writing is permitted with respect to all of the recordable area in the disc 100, except for the DMA.

The DFL 33 contains information regarding a defect. For example, the DFL 33 includes an address of a defective block occurring in a user data area 122 shown in FIG. 2, an address of a replacement block used for replacing the defective block, and state information regarding the defect.

FIG. 4 illustrates a detailed structure of the access control area 113 shown in FIG. 2. Referring to FIG. 4, the access control area 113 includes access control data #1 410, access control data #2 420, and access control data #3 430.

The access control area 113 stores a common information table regarding all functions of existing standards and new standards. Access control data constitutes a common information table regarding each function of the existing standards and new standards. For example, the access control data #1 410 constitutes a common information table regarding "function1", the access control data #2 420 constitutes a common information table regarding "function2", and the access control data #3 430 constitutes a common information table regarding "function3". The function1 may be provided by existing standards, and, as a result, may be recognized by a drive system. However, the function2 and the function3 may not be provided by existing standards, but rather by new standards, and, as a result, may not be recognized by the drive system.

The access control data #1 410 includes an ACD_ID 411, i.e., an ID used to identify access control data, formatability information 412 used to indicate whether the disc 100 can be formatted, DMA recordability/reproducibility information 413 used to indicate whether a DMA is recordable or is only reproducible, spare area recordability/reproducibility information 414 used to indicate whether a spare area is recordable or is only reproducible, and user data area (UDA) recordability/reproducibility information 415 used to indicate whether a UDA is recordable or is only reproducible. The formatability information 412, the DMA recordability/reproducibility information 413, the spare area recordability/reproducibility information 414, and the UDA recordability/reproducibility information 415 are included in the common information table.

A drive system can determine, based on the ACD_ID 411 shown in FIG. 4, whether the access control data #1 410 refers to a recognizable function. In addition, the drive system can perform at least minimum proper operations with respect to an unrecognizable function based on fields included in the common information table.

Similarly, the access control data #2 420 also includes an ACD_ID 421, formatability information 422, DMA recordability/reproducibility information 423, spare area recordability/reproducibility information 424, and UDA recordability/reproducibility information 425.

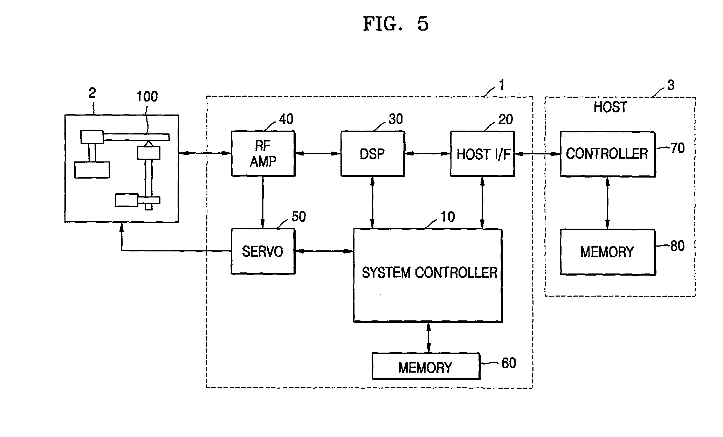

Turning now to FIG. 5, a schematic block diagram of an example drive system in the form of a recording/reproducing apparatus according to an embodiment of the present invention is shown. As shown in FIG. 5, the recording/reproducing apparatus comprises a writing/reading unit 2 and a control unit 1.

The writing/reading unit 2 includes a pickup, and writes data to and reads data from the disc 100. The control unit 1 controls the writing/reading unit 2 to write data to and read data from the disc 100 according to a predetermined file system. In particular, the control unit 1 determines whether to reinitialize the disc 100 and reinitializes the disc 100 if necessary. The control unit 1 includes a system controller 10, a host interface (I/F) 20, a digital signal processor (DSP) 30, a radio frequency (RF) amplifier (AMP) 40, a servo 50, and a memory 60.

During recording, the host I/F 20 receives a predetermined write command from a host 3 and transmits the same write command to the system controller 10. The system controller 10 controls the DSP 30 and the servo 50 to execute the write command received from the host I/F 20. The DSP 30 adds additional data such as parity data to data received from the host I/F 20, performs error correction coding (ECC) to generate an ECC block for error correction, and modulates the ECC block in a predetermined mode. The RF AMP 40 converts data output from the DSP 30 into an RF signal. The writing/reading unit 2 including the pickup writes the RF signal received from the RF AMP 40 onto the disc 100. The servo 50 receives a servo control command from the system controller 10 and performs servo control on the pickup included in the writing/reading unit 2.

During reproducing, the host I/F 20 receives a read command from the host 3. The system controller 10 performs initialization needed for reproducing. The writing/reading unit 2 radiates a laser beam on the disc 100 and outputs an optical signal obtained from the laser beam reflected from the disc 100. The RF AMP 40 converts the optical signal received from the writing/reading unit 2 into an RF signal, provides modulated data obtained from the RF signal to the DSP 30, and provides a servo signal obtained from the RF signal to the servo 50. The DSP 30 demodulates the modulated data and outputs data obtained by performing ECC on the demodulated data. Meanwhile, the servo 50 receives the servo signal from the RF AMP 40 and the servo control command from the system controller 10 and performs servo control on the pickup included in the writing/reading unit 2. The host I/F 20 transmits the data from the DSP 30 to the host 3. The system controller 10 reads disc management information or defect information from the disc 100 and controls the servo 50 to read data from a position where data has been recorded with no defects on the disc 100.

The recording/reproducing apparatus illustrated in FIG. 5, may be implemented by an individual recording apparatus and an individual reproducing apparatus, or alternatively, by a single apparatus designed to perform both recording and reproducing operations.

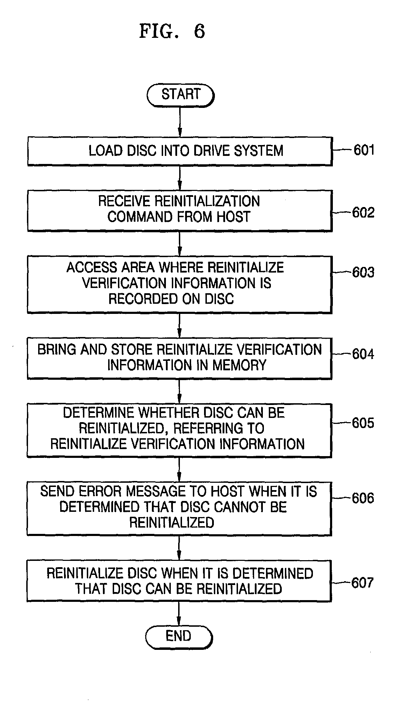

A reinitializing method performed by the recording/reproducing apparatus shown in FIG. 5 according to an embodiment of the present invention will be described with reference to FIG. 6. In the reinitializing method illustrated in FIG. 6, a drive system, i.e., the recording/reproducing apparatus shown in FIG. 5, determines whether to reinitialize the disc 100.

In operation 601, the disc 100 is loaded into a drive system, i.e., the recording/reproducing apparatus shown in FIG. 5. Next, in operation 602, the system controller 10 included in the drive system receives a disc reinitialization command from the host 3. Then, the system controller 10 controls the servo 50 to access an area on the disc 100 in which reinitialize verification information is recorded, in operation 603, and brings the reinitialize verification information from the area and stores the same in the memory 60, in operation 604. Next, in operation 605, the system controller 10 determines whether the disc 100 can be reinitialized, referring to the reinitialize verification information stored in the memory 60. If the disc 100 cannot be reinitialized, the system controller 10 sends an error message to the host 3, in operation 606. However, if the disc 100 can be reinitialized, the system controller 10 reinitializes the disc 100 accordingly, in operation 607.

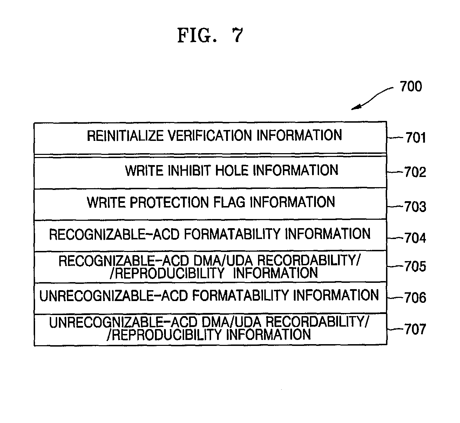

FIG. 7 illustrates a table 700 of example reinitialize verification information 701 referred to by the system controller 10 according to an embodiment of the present invention. As shown in FIG. 7, the reinitialize verification information 701 includes write inhibit hole information 702, write protection flag information 703, recognizable-access control data (ACD) formatability information 704, recognizable-ACD DMA/UDA recordability/reproducibility information 705, unrecognizable-ACD formatability information 706, and unrecognizable-ACD DMA/UDA recordability/reproducibility information 707.

The write inhibit hole information 702 is used to determine whether a write inhibit hole formed in a cartridge containing the disc 100 is open or closed. The disc 100 may be placed in a cartridge for protection, and the cartridge may include a write inhibit hole that can be directly controlled by a user. When the write inhibit hole is open, writing to the disc 100 is prohibited. When the write inhibit hole is closed, writing to the disc 100 is allowed. In other words, if a user wants to prohibit writing to the disc 100, the user can open the write inhibit hole before loading the disc 100 into the drive system. On the contrary, if the user wants to allow writing to the disc 100, the user can close the write inhibit hole before loading the disc 100 into the drive system. When the disc 100 is in a cartridge or when a cartridge containing the disc 100 can be opened, the reinitialize verification information 701 includes the write inhibit hole information 702. However, when the disc 100 is not in a cartridge, the reinitialize verification information 701 does not include the write inhibit hole information 702.

The write protection flag information 703 may be obtained from the DDS 31 included in a DMA in the lead-in area 110 of the disc 100, as shown in FIG. 2 and FIG. 3. If the write protection flag information 703 is set to prohibit writing, the disc 100 cannot be reinitialized.

The recognizable-ACD formatability information 704 and the recognizable-ACD DMA/UDA recordability/reproducibility information 705 may be obtained from access control data (ACD) regarding a function that can be recognized by the drive system among ACD recorded in the access control area 113 included in the lead-in area 110 of the disc 100, as shown in FIG. 2 and FIG. 4. If the recognizable-ADC formatability information 706 is set as unformatable, the disc 100 cannot be reinitialized. In addition, if either of a DMA and a UDA is set as unrecordable, the disc 100 cannot be reinitialized.

Similarly, the unrecognizable-ADC formatability information 706 and the recognizable-ADC DMA/UDA recordability/reproducibility information 707 may be obtained from access control data (ACD) regarding a function that cannot be recognized by the drive system among ACD recorded in the access control area 113 included in the lead-in area 110 of the disc 100. If the unrecognizable-ADC formatability information 706 is set as unformatable, the disc 100 cannot be reinitialized. In addition, if either of a DMA and a UDA is set as unrecordable, the disc 100 cannot be reinitialized.

The system controller 10 checks each item included in the table 700 of the reinitialize verification information 701, and determines that the disc 100 can be reinitialized when all of the items allow writing. If any one of the items is set as unrecordable, the system controller 10 determines not to reinitialize the disc 100.

Therefore, if it is determined that the disc 100 cannot be reinitialized, the system controller 10 sends an error message to the host 3, as shown in FIG. 6, in operation 606. However, if it is determined that the disc 100 can be reinitialized, the system controller 10 reinitializes the disc 100 accordingly, as shown in FIG. 6, in operation 607.

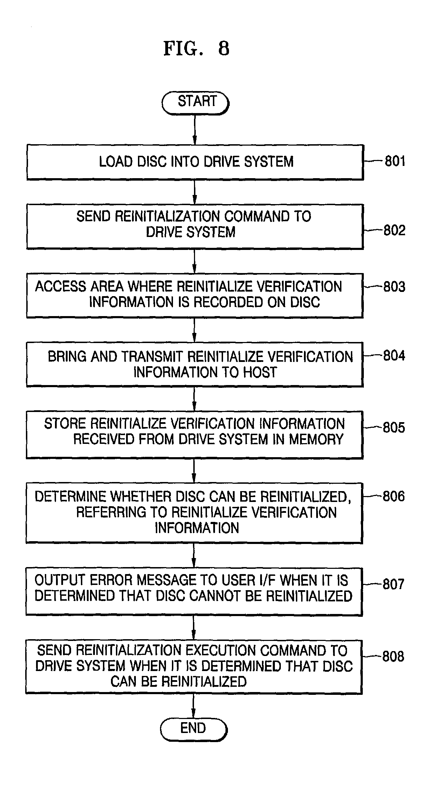

FIG. 8 is a flowchart of a reinitializing method according to another embodiment of the present invention. The reinitializing method shown in FIG. 8 is different from that shown in FIG. 6 in that the host 3, rather than a drive system (i.e., the recording/reproducing apparatus shown in FIG. 5), determines whether to reinitialize the disc 100.

Referring to FIG. 8, in operation 801, the disc 100 is loaded into a drive system, i.e., a recording/reproducing apparatus as shown in FIG. 5. In operation 802, the host 3 including a controller 70 and a memory 80 as shown in FIG. 5, sends a reinitialization command to the drive system. In operation 803, the system controller 10 included in the drive system, upon receipt of the reinitialization command via the host I/F 20, controls the servo 50 to access an area on the disc 100 in which reinitialize verification information is recorded. In operation 804, the system controller 10 included in the drive system, controls the writing/reading unit 2 to read the reinitialize verification information from the area on the disc 100 and transmit the same reinitialize verification information to the host 3. In operation 805, the controller 70 included in the host 3 stores the reinitialize verification information received from the drive system in the memory 80, shown in FIG. 5 . The reinitialize verification information obtained has the same structure as the table 700 shown in FIG. 7. In operation 806, the controller 70 included in the host 3 determines whether the disc 100 can be reinitialized, referring to the reinitialize verification information. The determination is made using the method performed by the drive system that has been described with reference to FIG. 6 and FIG. 7. Next, in operation 807, the controller 70 included in the host 3 outputs an error message to a user I/F, when it is determined that the disc 100 cannot be reinitialized. In operation 808, however, the controller 70 included in the host 3 sends a reinitialization execution command to the drive system to reinitialize the disc 100, when it is determined that the disc 100 can be reinitialized.

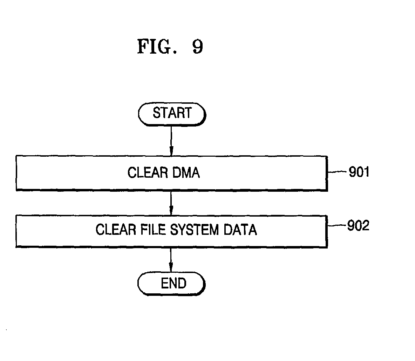

Turning now to FIG. 9, an example operation of reinitializing a disc 100 according to an embodiment of the present invention is illustrated in detail. When a disc 100 is to be reinitialized, whether determined by the drive system as described with reference to FIG. 6, or alternatively, by the host 3 as described with reference to FIG. 8, the system controller 10 included in the drive system removes a DMA from the disc 1000. Specifically, a disc definition structure (DDS) and a defect list (DFL) which are recorded in the DMA, as shown in FIG. 3, are cleared. Since the disc 100 will be initialized, defect information regarding previous use is not necessary. As a result, data in the DMA can be cleared. In addition, while it is possible to mark a defect detected in the previous use, all defect information indicating a result of linear displacement must be removed.

Therefore, clearing data in a DMA will be spontaneously performed by updating the DMA with reinitialized DMA information. The reinitialized DMA information may include an initial DFL and a DDS which includes information on allocation of a spare area to a data area for initial use of the disc 100, defect management, shown in FIG. 3, and a start address and an end address of a user data area (UDA), shown in FIG. 2.

Next, in operation 902, the system controller 10 included in the drive system clears file system data. The file system data is recorded in a predetermined portion of the user data are (UDA) to manage data recorded in the UDA on the disc 100. If the file system data is not cleared, an application does not recognize the disc 100 as empty, but is likely to recognize the disc 100 as having data.

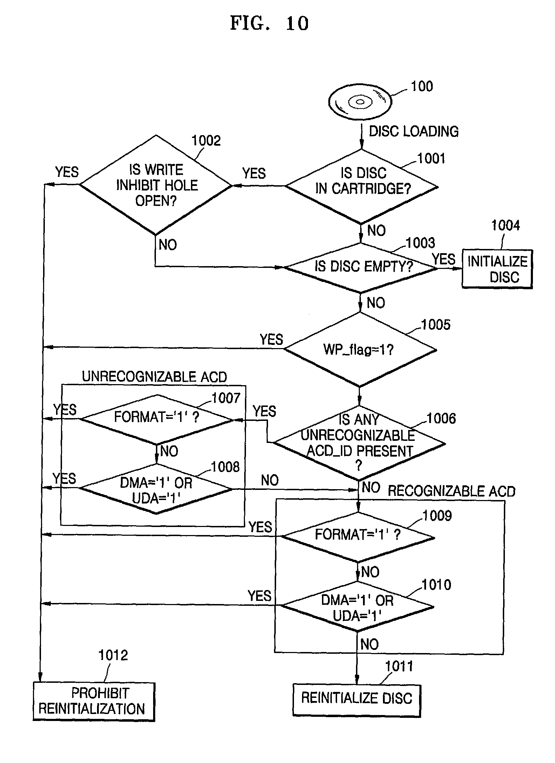

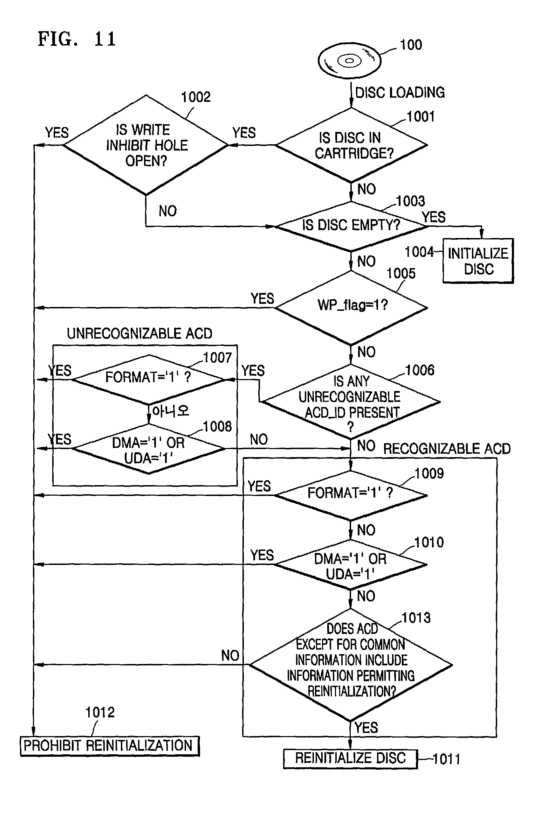

Reinitializing determination methods using reinitialize verification information will be described in detail with reference to FIGS. 10 and 11. Here, the reinitializing determination methods are performed by a drive system, i.e., a recording/reproducing system, shown in FIG. 5. However, such methods may also be performed by a host 3 separate from the drive system, as shown in FIG. 5.

FIG. 10 is a flowchart of an example reinitializing determination method using reinitialize verification information according to an embodiment of the present invention. If the disc 100 is loaded into a drive system, i.e., the recording/reproducing apparatus shown in FIG. 5, in operation 1001, the drive system determines whether the disc 100 is in a cartridge.

If it is determined that the disc 100 is in the cartridge, in operation 1002, the drive system determines whether a write inhibit hole is open. If it is determined that the write inhibit hole is open, which prohibits writing, reinitialization is prohibited in operation 1012.

However, if it is determined that the write inhibit hole is closed (not open), the drive system determines whether the disc 100 is empty in operation 1003. Here, a DMA included in a lead-in area on the disc 100 may be accessed to determine whether the disc 100 is empty. In other words, when no data is recorded in the DMA, the drive system recognizes that the disc 100 is empty since every disc is initialized before being used and initialization information is recorded in the DMA during the initialization. During the initialization of the disc 100, an empty DFL including initialization information and a DDS which includes information on allocation of a spare area to a data area for replacement when a defect occurs in the data area and information on a structure of the data area are recorded in the DMA included in the lead-in area on the disc 100.

If it is determined that the disc 100 is empty, the drive system initializes the disc 100 according to a command from a host 3, shown in FIG. 5, or a request from a drive manufacturer, in operation 1004.

If it is determined that the disc 100 is not empty, that is, the disc 100 has been used, the drive system checks a value of a write protection flag WP_flag among information included in the DDS recorded in the DMA on the disc 100 in operation 1005. If the value of the write protection flag WP_flag is "1", the drive system recognizes that data writing is prohibited with respect to all recordable areas on the disc 100 except for the DMA. Accordingly, in operation 1012, reinitialization is prohibited.

If the value of the write protection flag WP_flag is "0", an ACD_ID of each item of ACD recorded in an access control area on the disc 100 is checked to determine whether each ACD item is about a recognizable or unrecognizable function in operation 1006. If the drive system can recognize a value of an ACD_ID, it is determined that an ACD item is about a recognizable function. Otherwise, it is determined that the ACD item is about an unrecognizable function.

If any ACD item regarding an unrecognizable function is present, in operation 1007, the drive system determines whether reinitialization is permitted based on a value set in a format field included in common information to ACD items regarding unrecognizable functions (referred to as unrecognizable ACD common information). If the format field has a value of "1", formatting is impossible. Accordingly, in operation 1012, reinitialization is prohibited.

If the format field included in the unrecognizable ACD common information has a value permitting reinitialization, in operation 1008, the drive system determines whether reinitialization of the disc 100 is permitted based on values respectively set in a DMA field and a UDA field included in the unrecognizable ACD common information. If either of the values respectively set in the DMA field and the UDA field is "1" indicating prohibition of writing, reinitialization is prohibited in operation 1012.

If both of the values respectively set in the DMA field and the UDA field are not "1", that is, both of the values indicate permission of writing, the drive system checks a value set in a format field included in common information to ACD items regarding recognizable functions (referred to as recognizable ACD common information) in operation 1009, and checks values respectively set in a DMA field and a UDA field included in the recognizable ACD common information in operation 1010 to determine whether to reinitialize the disc 100.

If all of the values respectively set in the format field, the DMA field, and the UDA field included in the recognizable ACD common information indicate permission of writing, the drive system reinitializes the disc 100 in operation 1011.

FIG. 11 is a flowchart of an example reinitializing determination method using reinitialize verification information according to another embodiment of the present invention. In addition to the operations shown in FIG. 10, the method shown in FIG. 11 further includes operation 1013.

Referring to FIG. 11, in operation 1010, the drive system checks the values respectively set in the DMA field and the UDA field included in the recognizable ACD common information. If both of the values indicate permission of writing, in operation 1013, the drive system determines whether recognizable ACD, except for the common information includes information regarding reinitialization, and determines whether the information regarding reinitialization is set as permitting reinitialization of the disc 100. If the information regarding reinitialization is set to permit reinitialization, the drive system reinitializes the disc 100 in operation 1011. Otherwise, the drive system prohibits reinitialization in operation 1012.

As described with reference to FIGS. 10 and 11, a plurality of information items are used in determining whether to reinitialize the disc 100. According to the configuration of the drive system, the plurality of information items may be checked in a priority order, as illustrated in FIGS. 10 and 11, or alternatively, may be checked without a specified order.

As shown in FIGS. 10 and 11, the plurality of information items may be checked in a priority order such as follows: a write inhibit hole of a cartridge ⇒ a write protection flag in a DDS ⇒ unrecognizable ACD common information ⇒ recognizable ACD common information.

In other words, firstly, if a write inhibit hole is present in the cartridge, the write inhibit hole is checked to determine whether it is open or closed. Secondly, if the write inhibit hole is closed, or if the disc 100 is not in the cartridge, a write protection flag in a DDS recorded in a DMA on the disc 100 is checked to determine whether a value thereof indicates permission of writing. Thirdly, if the value of the write protection flag indicates permission of writing, it is determined whether an unrecognizable function is present based on an ACD_ID of each item of ACD recorded in an access control area on the disc 100, and if the unrecognizable function is present, it is determined whether the disc 100 can be reinitialized based on common information to ACD items regarding unrecognizable functions. Fourthly, if the disc 100 can be reinitialized, it is determined whether the disc 100 can be reinitialized based on common information to ACD items regarding recognizable functions.

The common information to ACD items regarding unrecognizable functions and the common information to ACD items regarding recognizable functions may also be checked in a priority order such as follows: a format field ⇒ a DMA field ⇒ a UDA field.

As described from the foregoing, embodiments of the present invention advantageously provide new techniques in which a new standard disc, i.e., an information recording medium, can be advantageously reinitialized by an existing standard drive system, i.e., a recording/reproducing apparatus, to ensure compatibility between the new standard disc and the existing standard drive system. As a result, an existing standard drive system can effectively operate not only an existing standard disc but also a new standard disc loaded therein in order to perform not only functions recognized by an existing standard but also new functions provided by a new standard not recognized by the existing standard.

The disclosed invention can also be embodied as computer readable codes on a computer readable recording medium. The computer readable recording medium may be any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

According to embodiments of the present invention, a disc can be reinitialized based on information common to all functions regardless of whether the functions are recognizable so that a drive system can reinitialize a disc, even if the disc is designed using a different standard or new standard.

While there have been illustrated and described what are considered to be example embodiments of the present invention, it will be understood by those skilled in the art and as technology develops that various changes and modification may be made therein, and equivalents may be substituted for element thereof without departing from the spirit and scope of the invention. Many modifications may be made to adapt the teachings of the present invention to a particular situation without departing from the scope thereof. For example, other computer readable media such as read-only memory (ROM), random-access memory (RAM), CD-ROMs, magnetic tapes, floppy disks, optical or holographic data storage devices, and carrier waves, as described above, may be utilized as long as reinitialize verification information in the form, as shown, for example, in FIG. 7, can be recorded for use in determining whether to reinitialize such media, when loaded into an existing drive system. In addition, different items of the reinitialize verification information can be recorded on different areas on the information recording medium (i.e., disc), and can be subsequently accessed selectively or in a priority order. Likewise, a central controller can be implemented as a chipset, or alternatively, a general or special purposed computer programmed to perform the methods as described with reference to FIG. 6, FIG. 8, FIG. 10 and FIG. 11. Accordingly, it is intended, therefore, that that present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information recording medium (100) comprising:
a data area (120);
a defect management area (115) to manage a defect occurring in the data area; and
an access control area (113) in which access control data regarding a recognizable function by a recording/reproducing apparatus into which the medium is loaded and access control data regarding an unrecognizable function by the recording/reproducing apparatus are recorded,
wherein a write protection flag (32) recorded in the defect management area (115) and the access control data (410, 420, 430) recorded in the access control area (113) provide reinitialize verification information for verifying whether the medium is reinitializable.

2. The information recording medium as claimed in claim 1, wherein the access control data (410, 420, 430) regarding the recognizable function and the access control data regarding the unrecognizable function comprise common information to the recognizable function and the unrecognizable function, and wherein the common information comprises:
an access control data ID (411, 421) to identify a function;
formatability information (412, 422) to indicate whether the medium is formatable;
recordability/reproducibility information (413, 423) to indicate whether the defect management area is recordable/reproducible; and
recordability/reproducibility information (415, 425) to indicate whether the data area is recordable/reproducible.

3. The information recording medium as claimed in claim 2, wherein information (702) indicating whether a write inhibit hole formed in a cartridge containing the medium is open or closed is further provided as reinitialize verification information (701).

4. The information recording medium as claimed in claim 3, wherein the reinitialize verification information (701) is provided in a priority order of:
the information (702) indicating whether the write inhibit hole is open or closed;
the write protection flag (703);
formatability information (704) included in the access control data regarding the unrecognizable function;
recordability/reproducibility information (705) included in the access control data regarding the unrecognizable function to indicate whether either of the defect management area and the data area is recordable/reproducible;
formatability information (706) included in the access control data regarding the recognizable function; and
recordability/reproducibility information (707) included in the access control data regarding the recognizable function to indicate whether either of the defect management area and the data area is recordable/reproducible.

5. The information recording medium as claimed in claim 3 or 4,
wherein the access control data regarding the recognizable function further comprises information regarding reinitialization of the medium, and
wherein the information regarding reinitialization provides further reinitialize verification information.

6. The information recording medium as claimed in claim 5, wherein the reinitialize verification information (701) is provided in a priority order of:
the information (702) indicating whether the write inhibit hole is open or closed;
the write protection flag (703);
formatability information (704) included in the access control data regarding the unrecognizable function;
recordability/reproducibility information (705) included in the access control data regarding the unrecognizable function to indicate whether either of the defect management area and the data area is recordable/reproducible;
formatability information (706) included in the access control data regarding the recognizable function;
recordability/reproducibility information included in the access control data regarding the recognizable function to indicate whether either of the defect management area and the data area is recordablelreproducible; and
the information regarding reinitialization included in the access control data regarding the recognizable function.

7. An information recording medium (100) comprising:
a data area (120);
a defect management area (115) for managing a defect occurring in the data area; and
an access control area (113) in which access control data regarding a recognizable function by a recording/reproducing apparatus into which the medium is loaded and access control data regarding an unrecognizable function by the recording/reproducing apparatus are recorded,
wherein information (701) verifying whether the medium is reinitializable is provided by at least one among:
information (702) indicating whether a write inhibit hole formed in a cartridge containing the medium is open or closed;
a write protection flag (703) recorded in the defect management area;
formatability information (706) included in the access control data regarding the unrecognizable function to indicate whether the medium is formatable;
recordability/reproducibility information (707) included in the access control data regarding the unrecognizable function to indicate whether either of the defect management area and the data area is recordable/reproducible;
formatability information (704) included in the access control data regarding the recognizable function to indicate whether the medium is formatable; and
recordability/reproducibility information (705) included in the access control data regarding the recognizable function to indicate whether either of the defect management area and the data area is recordable/reproducible.

8. A recording/reproducing method of recording data onto or reproducing data from an information recording medium (100), the recording/reproducing method comprising:
reading (1005) a write protection flag from a defect management area provided for managing a defect occurring in a data area on the medium, and reading (1006) access control data from an access control area in which access control data regarding a recognizable function by a recording/reproducing apparatus into which the medium is loaded and access control data regarding an unrecognizable function by the recording/reproducing apparatus are recorded; and
determining whether to reinitialize the medium based on the write protection flag and the access control data.

9. The recording/reproducing method as claimed in claim 8,
wherein the access control data regarding the recognizable function and the access control data regarding the unrecognizable function comprise common information to the recognizable function and the unrecognizable function, and
wherein the common information comprises at least one among an access control data ID (411) identifying a function, formatability information (412) indicating whether the medium is formatable, recordability/reproducibility information (413) indicating whether the defect management area is recordable/reproducible, or recordability/reproducibility information (415) indicating whether the data area is recordable/reproducible.

10. The recording/reproducing method as claimed in claim 9, wherein the determining whether to reinitialize the medium further depends on information indicating whether a write inhibit hole formed in a cartridge containing the medium is open or closed (1002).

11. The recording/reproducing method as claimed in claim 10, wherein the determining whether to reinitialize the medium depends on information provided in a priority order of:
the information (702) indicating whether the write inhibit hole is open or closed;
the write protection flag (703);
formatability information (706) included in the access control data regarding the unrecognizable function;
recordability/reproducibility information (707) included in the access control data regarding the unrecognizable function to indicate whether either of the defect management area and the data area is recordable/reproducible;
formatability information (704) included in the access control data regarding the recognizable function; and
recordability/reproducibility information (705) included in the access control data regarding the recognizable function to indicate whether either of the defect management area and the data area is recordable/reproducible.

12. The recording/reproducing method as claimed in claim 10,
wherein the access control data regarding the recognizable function further comprises information regarding reinitialization of the medium, and
wherein the determining (806) whether to reinitialize the medium further depends on the information regarding reinitialization.

13. The recording/reproducing method as claimed in claim 12, wherein the determining whether to reinitialize the medium depends on information provided in a priority order of:
the information (1002) indicating whether the write inhibit hole is open or closed;
the write protection flag (1005);
formatability information (706) included in the access control data regarding the unrecognizable function;
recordability/reproducibility information (707) included in the access control data regarding the unrecognizable function to indicate whether either of the defect management area and the data area is recordable/reproducible;
formatability information (704) included in the access control data regarding the recognizable function;
recordability/reproducibility information (705) included in the access control data regarding the recognizable function to indicate whether either of the defect management area and the data area is recordable/reproducible; and
the information regarding reinitialization included in the access control data regarding the recognizable function.

14. The recording/reproducing method as claimed in any of claims 8-13, further comprising reinitializing the medium by removing data recorded in the defect management area (901) and file system data (902) recorded in the data area if , the medium is determined to be reinitialized.

15. A recording/reproducing method of recording data onto or reproducing data from an information recording medium, the recording/reproducing method comprising:
reading a write protection flag (1005) from a defect management area provided for managing a defect occurring in a data area on the medium and reading access control data (1006) from an access control area in which access control data regarding a recognizable function by a recording/reproducing apparatus into which the medium is loaded and access control data regarding an unrecognizable function by the recording/reproducing apparatus are recorded; and
determining whether to reinitialize the medium based on at least one among information indicating whether a write inhibit hole formed in a cartridge containing the medium is open or closed (1002), the write protection flag (1003), formatability information included in the access control data regarding the unrecognizable function (1007), recordability/reproducibility information included in the access control data regarding the unrecognizable function to indicate whether either of the defect management area and the data area is recordable/reproducible (1008), formatability information included in the access control data regarding the recognizable function (1009), and recordability/reproducibility information included in the access control data regarding the recognizable function to indicate whether either of the defect management area and the data area is recordable/reproducible (1010).

16. A recording/reproducing apparatus for recording data onto or reproducing data from an information recording medium (100), the recording/reproducing apparatus comprising:
a writing/reading unit (2) arranged to read a write protection flag from a defect management area provided for managing a defect occurring in a data area on the medium and reading access control data from an access control area in which access control data regarding a recognizable function by the recording/reproducing apparatus loaded with the medium and access control data regarding an unrecognizable function by the recording/reproducing apparatus are recorded; and
a control unit (1) arranged to determine whether to reinitialize the medium based on the write protection flag and the access control data.

17. The recording/reproducing apparatus as claimed in claim 16,
wherein the access control data regarding the recognizable function and the access control data regarding the unrecognizable function comprise common information to the recognizable function and the unrecognizable function, and
wherein the common information comprises at least one among an access control data ID identifying a function, formatability information indicating whether the medium is formatable, recordability/reproducibility information indicating whether the defect management area is recordable/reproducible, and recordability/reproducibility information indicating whether the data area is recordable/reproducible.

18. The recording/reproducing apparatus as claimed in claim 17, wherein the control unit is operable to determine whether to reinitialize the medium based on further information indicating whether a write inhibit hole formed in a cartridge containing the medium is open or closed.

19. The recording/reproducing apparatus as claimed in claim 18, wherein the control unit is operable to determine whether to reinitialize the medium based on information provided in a priority order of:
the information (702) indicating whether the write inhibit hole is open or closed;
the write protection flag (703);
formatability information (706) included in the access control data regarding the unrecognizable function;
recordability/reproducibility information (707) included in the access control data regarding the unrecognizable function to indicate whether either of the defect management area and the data area is recordable/reproducible;
formatability information (704) included in the access control data regarding the recognizable function; and
recordability/reproducibility information (705) included in the access control data regarding the recognizable function to indicate whether either of the defect management area and the data area is recordable/reproducible.

20. The recording/reproducing apparatus as claimed in claim 18 or 19,
wherein the access control data regarding the recognizable function further comprises information regarding reinitialization of the medium, and
wherein the control unit determines whether to reinitialize the medium further based on the information regarding reinitialization.

21. The recording/reproducing apparatus as claimed in claim 20, wherein the control unit is operable to determine whether to reinitialize the medium based on information provided in a priority order of:
the information (702) indicating whether the write inhibit hole is open or closed;
the write protection flag (703);
formatability information (706) included in the access control data regarding the unrecognizable function;
recordability/reproducibility information (707) included in the access control data regarding the unrecognizable function to indicate whether either of the defect management area and the data area is recordable/reproducible;
formatability information (704) included in the access control data regarding the recognizable function;
recordability/reproducibility information (705) included in the access control data regarding the recognizable function to indicate whether either of the defect management area and the data area is recordable/reproducible; and
the information regarding reinitialization included in the access control data regarding the recognizable function.

22. The recording/reproducing apparatus as claimed in any of claims 16-21, wherein, when the control unit (1) determines to reinitialize the medium, the control unit is operable to control the writing/reading unit (2) to remove data recorded in the defect management area and file system data recorded in the data area.

23. A recording/reproducing apparatus for recording data onto or reproducing data from an information recording medium (100), the recording/reproducing apparatus comprising:
a writing/reading unit (2) arranged to read a write protection flag from a defect management area provided for managing a defect occurring in a data area on the medium and reading access control data from an access control area in which access control data regarding a recognizable function by the recording/reproducing apparatus loaded with the medium and access control data regarding an unrecognizable function by the recording/reproducing apparatus are recorded; and
a control unit (1) arranged to determine whether to reinitialize the medium based on at least one among information indicating whether a write inhibit hole formed in a cartridge containing the medium is open or closed, the write protection flag, formatability information included in the access control data regarding the unrecognizable function, recordability/reproducibility information included in the access control data regarding the unrecognizable function to indicate whether either of the defect management area and the data area is recordable/reproducible, formatability information included in the access control data regarding the recognizable function, and recordability/reproducibility information included in the access control data regarding the recognizable function to indicate whether either of the defect management area and the data area is recordable/reproducible.

24. A recording/reproducing apparatus for recording data onto or reproducing data from an information recording medium, the recording/reproducing apparatus comprising:
a writing/reading unit (2) arranged to read a write protection flag from a defect management area provided for managing a defect occurring in a data area on the medium and reading access control data from an access control area in which access control data regarding a recognizable function by the recording/reproducing apparatus loaded with the medium and access control data regarding an unrecognizable function by the recording/reproducing apparatus are recorded; and
a control unit (1) arranged to transmit the write protection flag and the access control data to a host apparatus, and to reinitialize the medium according to a result of the host apparatus determining whether to reinitialize the medium based on the write protection flag and the access control data.

25. A host apparatus for a recording/reproducing apparatus writing data onto or reading data from an information recording medium, the host apparatus comprising:
a control unit coupled to receive, from the recording/reproducing apparatus, a write protection flag read from a defect management area provided for managing a defect occurring in a data area on the medium and access control data read from an access control area in which access control data regarding a recognizable function by the recording/reproducing apparatus loaded with the medium and access control data regarding an unrecognizable function by the recording/reproducing apparatus are recorded, and to determine whether to reinitialize the medium based on the write protection flag and the access control data.

26. The recording/reproducing apparatus as claimed in claim 24,
wherein the access control data regarding the recognizable function and the access control data regarding the unrecognizable function comprise common information to the recognizable function and the unrecognizable function, and
wherein the common information comprises at least one among an access control data ID identifying a function, formatability information indicating whether the medium is formatable, recordability/reproducibility information indicating whether the defect management area is recordable/reproducible, or recordabilitylreproducibility information indicating whether the data area is recordable/reproducible.

27. The recording/reproducing apparatus as claimed in claim 26, wherein the control unit further transmits information indicating whether a write inhibit hole formed in a cartridge containing the medium is open or closed, to the host apparatus for determining whether to reinitialize the medium.

28. The recording/reproducing apparatus as claimed in claim 27, wherein the host apparatus determines whether to reinitialize the medium based on information provided in a priority order of:
the information (702) indicating whether the write inhibit hole is open or closed;
the write protection flag (703);
the formatability information (706) included in the access control data regarding the unrecognizable function;
the recordability/reproducibility information (707) included in the access control data regarding the unrecognizable function to indicate whether either of the defect management area and the data area is recordable/reproducible;
the formatability information (704) included in the access control data regarding the recognizable function; and
the recordability/reproducibility information (705) included in the access control data regarding the recognizable function to indicate whether either of the defect management area and the data area is recordable/reproducible.

29. The recording/reproducing apparatus as claimed in any of claims 26-28,
wherein the access control data regarding the recognizable function further comprises information regarding reinitialization of the medium, and
wherein the determining whether to reinitialize the medium further depends on the information regarding reinitialization.

30. The recording/reproducing apparatus as claimed in claim 29, wherein the host apparatus is operable to determine whether to reinitialize the medium based on information provided in a priority order of:
the information indicating whether the write inhibit hole is open or closed;
the write protection flag;
the formatability information included in the access control data regarding the unrecognizable function;
the recordability/reproducibility information included in the access control data regarding the unrecognizable function to indicate whether either of the defect management area and the data area is recordable/reproducible;
the formatability information included in the access control data regarding the recognizable function;
the recordability/reproducibility information included in the access control data regarding the recognizable function to indicate whether either of the defect management area and the data area is recordable/reproducible; and
the information regarding reinitialization included in the access control data regarding the recognizable function.

31. The recording/reproducing apparatus as claimed in any of claims 26-30, wherein the host apparatus is operable to reinitialize the medium by removing data recorded in the defect management area (901) and file system data (902) recorded in the data area.

32. A method comprising:
receiving an information storage medium (100) loaded into a drive system, the information recording medium comprising a data area (120) to record user data, a defect management area (115) to record at least write protection flag information, and an access control area (113) to record access control data regarding a recognizable or unrecognizable function by the drive system into which the medium is loaded; and
obtaining, at the drive system, reinitialize verification information (701) including the write protection flag information recorded in the defect management area and the access control data recorded in the access control area of the medium; and
determining whether to reinitialize the medium based on the reinitialize verification information including the write protection flag information and the access control data.

33. The method as claimed in claim 32, wherein the reinitialize verification information further includes information (702) indicating whether a write inhibit hole formed in a cartridge containing the medium is open or closed, after the medium is loaded into the drive system, and wherein the determining whether to reinitialize the medium is further based on the information indicating whether a write inhibit hole formed in a cartridge containing the medium is open or closed.

34. The method as claimed in claim 33, wherein the access control data regarding a recognizable or unrecognizable function comprise common information regarding all functions of an existing standard and a new standard, and wherein the common information comprises:
an access control data ID identifying a function;
formatability information indicating whether the medium is formatable;
recordability/reproducibility information indicating whether the defect management area is recordable/reproducible; and
recordability/reproducibility information indicating whether the data area is recordable/reproducible.

35. The method as claimed in claim 34, wherein the reinitialize verification information is obtained in a priority order of:
the information indicating whether the write inhibit hole is open or closed;
the write protection flag information;
formatability information included in the access control data regarding an unrecognizable function;
recordability/reproducibility information included in the access control data regarding the unrecognizable function to indicate whether either of the defect management area and the data area is recordable/reproducible;
formatability information included in the access control data regarding a recognizable function; and
recordability/reproducibility information included in the access control data regarding the recognizable function to indicate whether either of the defect management area and the data area is recordable/reproducible.

36. The method as claimed in claim 35, further comprising:
when the medium is determined to be reinitialized, removing data recorded in the defect management area (901) and file system data recorded in the data area (902).

37. The method as claimed in claim 35 or 36, wherein the determining whether to reinitialize the medium is performed at the drive system, upon a request from a host.

38. The method as claimed in claim 37, wherein, when the medium is determined to be reinitialized, the drive system removes data recorded in the defect management area and file system data recorded in the data area.

39. The method as claimed in any of claims 35-38, wherein the determining whether to reinitialize the medium is performed at a host coupled to the drive system, upon receipt of the reinitialize verification information transmitted from the drive system.

40. The method as claimed in claim 39, wherein, when the medium is determined to be reinitialized, the host sends a reinitialized execution command to the drive system to remove data recorded in the defect management area and file system data recorded in the data area.

41. A drive system comprising:
a writing/reading unit (2) arranged to receive and read an information storage medium comprising a data area to record user data, a defect management area to record at least write protection flag information, and an access control area to record access control data regarding a recognizable or unrecognizable function; and
a control unit (1) arranged to obtain reinitialize verification information including the write protection flag information recorded in the defect management area and the access control data recorded in the access control area of the medium, and to determine whether to reinitialize the medium based on the reinitialize verification information including the write protection flag information and the access control data.

42. The drive system as claimed in claim 41, wherein the reinitialize verification information further includes information indicating whether a write inhibit hole formed in a cartridge containing the medium is open or closed, and wherein the determining whether to reinitialize the medium is further based on the information indicating whether a write inhibit hole formed in a cartridge containing the medium is open or closed.

43. The drive system as claimed in claim 42, wherein the access control data regarding a recognizable or unrecognizable function comprise common information regarding all functions of an existing standard and a new standard, and wherein the common information comprises:
an access control data ID identifying a function;
formatability information indicating whether the medium is formatable;
recordability/reproducibility information indicating whether the defect management area is recordable/reproducible; and
recordability/reproducibility information indicating whether the data area is recordable/reproducible.

44. The drive system as claimed in claim 43, wherein the control unit is operable to obtain reinitialize verification information provided in a priority order of:
the information indicating whether the write inhibit hole is open or closed;
the write protection flag information;
formatability information included in the access control data regarding an unrecognizable function;
recordability/reproducibility information included in the access control data regarding the unrecognizable function to indicate whether either of the defect management area and the data area is recordable/reproducible;
formatability information included in the access control data regarding a recognizable function; and
recordability/reproducibility information included in the access control data regarding the recognizable function to indicate whether either of the defect management area and the data area is recordable/reproducible.

45. The drive system as claimed in claim 44, wherein, when the medium is determined to be reinitialized, the control unit is operable to remove data recorded in the defect management area and file system data recorded in the data area.
